Europäisches Patentamt

European Patent Office

Office européen des brevets

(19)

(11) Veröffentlichungsnummer : **0 024 520**
**B1**

# (12) EUROPÄISCHE PATENTSCHRIFT

(45) Veröffentlichungstag der Patentschrift :
01.06.83

(21) Anmeldenummer : 80103951.2

(22) Anmeldetag : 10.07.80

(51) Int. Cl.³ : **E 06 B  3/26**, B 29 D 27/00,
**F 16 S  3/02**

(54) Verfahren zur Herstellung thermisch isolierter Verbundprofile.

(30) Priorität : 14.07.79 DE 2928574

(43) Veröffentlichungstag der Anmeldung :
11.03.81 Patentblatt 81/10

(45) Bekanntmachung des Hinweises auf die Patenterteilung : 01.06.83 Patentblatt 83/22

(84) Benannte Vertragsstaaten :
AT CH DE FR GB IT LI NL SE

(56) Entgegenhaltungen :
BE A 767 810
DE A 2 129 964
DE A 2 254 762
DE A 2 531 221
DE A 2 721 367
FR A 2 081 740
FR A 2 194 867
US A 3 496 058

(73) Patentinhaber : **Mühle, Manfred**
**Tulpenstrasse 11**
**D-4972 Löhne 2 (DE)**

(72) Erfinder : **Mühle, Manfred**
**Tulpenstrasse 11**
**D-4972 Löhne 2 (DE)**

(74) Vertreter : **Hentzschel, Hans-Jürgen, Dipl.-Ing.**
**Am Hohen Ufer 8**
**D-4970 Bad Oeynhausen 1 (DE)**

# Verfahren zur Herstellung thermisch isolierter Verbundprofile

Die Erfindung bezieht sich auf ein Verfahren zur Herstellung thermisch isolierter Verbundprofile, bei dem mindestens zwei mit Abstand zueinander gehaltene Metallprofile einen nach unten hin abgedichteten Freiraum bilden, der von seiner offenen Seite her mit zunächst in flüssiger Form befindlichem, anschließend erhärtendem Isoliermaterial ausgefüllt wird. Nach diesem Verfahren hergestellte Verbundprofile finden vor allem im Tür- und Fensterbau Verwendung und erlangen dort aus Gründen der Energieeinsparung zunehmende Bedeutung.

Ein Verfahren der vorgenannten Gattung wird in der nach dem Prioritätstag der vorliegenden Anmeldung veröffentlichten deutschen Patentanmeldung P 29 08 618.8 (DE-A-2 908 618, Offenlegungstag 11.9.80) beschrieben. Es geht davon aus, daß zu Beginn des Verfahrens die Metallprofile in eine sie unter Bildung des für die Aufnahme des Isoliermaterials bestimmten Freiraumes abstützende Halterung eingelegt werden, danach der seitlich von den Metallprofilen begrenzte Freiraum sowohl von oben her als auch an den Enden der Metallprofile mit einem auf den Metallprofilen selbstklebenden Abdeckstreifen verschlossen und den Metallprofilen ein rinnenförmiges Führungsprofil aufgestülpt wird. Im weiteren Verfahrensablauf wird das rinnenförmige Führungsprofil mit den Metallprofilen sowie deren Halterung in der Längsachse um etwa 180° gedreht, und die im Anschluß an den Drehvorgang oben liegende Halterung von den Metallprofilen abgenommen. Nun kann das in flüssiger Form befindliche Isoliermaterial an der unverschlossen gebliebenen Seite des Freiraumes in diesen eingebracht werden, woraufhin sich nach dem Erhärten des Isoliermaterials das fertige Verbundprofil dem Führungsprofil entnehmen läßt.

Aus den deutschen Offenlegungsschriften 21 29 964 und 27 05 870 sind Verfahren bekannt, bei denen die durch eine Isoliermaterialschicht miteinander zu verbindenden Metallprofile mit gegenseitigem Abstand in einer Form angeordnet und an der Unterseite entlang des zwischen ihnen befindlichen Freiraumes mit einer beweglichen Leiste abgedichtet oder zum gleichen Zweck gegen eine Bodenabdeckung in der Form niedergedrückt werden. Der so lediglich nach oben offene Freiraum läßt sich dann zur Fertigstellung des Verbundprofils mit flüssigem Isoliermaterial ausgießen.

Auch ist es aus der deutschen Auslegeschrift 12 45 567 bekannt, die im Verbundprofil voneinander getrennten Metallprofile vor dem Ausgießen ihres Freiraumes mit Isoliermaterial als einstückiges Profil herzustellen, indem sie unterhalb des Freiraumes durch einen diesen verschließenden Überbrückungssteg in Verbindung stehen, der nach dem Erhärten der Isoliermaterialschicht abgefräst bzw. auf anderem Wege mechanisch entfernt wird.

Um einesteils den thermischen Wirkungsgrad der Isoliermaterialschicht von Verbundprofilen der in Rede stehenden Art zu verbessern und zum anderen vor allem bei großen Profilquerschnitten teueres Isoliermaterial einzusparen, wurde bereits vielfach vorgeschlagen, mit dem in den Freiraum der Metallprofile eingebrachten Isoliermaterial unter Belassung eines von ihm freien luftgefüllten Hohlraumes nur einzelne Verbindungsstege zwischen den Metallprofilen herzustellen. Entsprechende Verfahren sind in den deutschen Offenlegungsschriften 22 54 762 und 27 21 367 erläutert, wo der Freiraum mit in Abständen angeordneten hohlen Begrenzungsstücken oder Trennleisten in mehrere Kammern unterteilt wird.

Diese bekannten Herstellungsverfahren sind sowohl wegen der Anbringung als auch des später wieder erfolgenden Entfernens der Trennmittel sehr zeit- und damit kostenaufwendig. Eine Kostensenkung ist auch nicht zu erreichen, wenn man die Trennmittel als verlorene Teile im Verbundprofil beläßt, weil deren zwar geringer aber doch nicht zu vernachlässigender Wert die Fertigungskosten wiederum belastet. Außerdem können im Verbundprofil verbleibende Begrenzungsstücke oder Trennleisten zwischen den thermisch voneinander isolierten Metallprofilen Temperaturbrücken bilden, von denen die Wirkung der Isoliermaterialschichten ungünstig beeinflußt würde.

Ein Nachteil luftgefüllter Hohlräume ergibt sich dadurch, daß diese Hohlräume mit Entwässerungsöffnungen versehen sein müssen, die gleichzeitig zum Dampfdruckausgleich unerläßlich sind. Als Folge davon kommt ein ständiger Luftaustausch zustande, der nicht nur die Isolierwirkung des Hohlraumes grundsätzlich vermindert, sondern bei niedrigen Temperaturen auch die Isolierwirkung gänzlich aufhebende Eisbildungen hervorruft. Deshalb empfiehlt es sich, die Hohlräume zwischen den Isolierschichten besser mit einem Material geringerer Wärmeleitfähigkeit auszufüllen, weil man auf diese Weise eine kontrollierte Isolierwirkung erzielen kann. Außerdem wird dadurch die schalltechnisch störende Resonanzwirkung von Hohlräumen vermieden.

Das Ausfüllen der Hohlräume im Isolierbereich von Verbundprofilen ist bereits in der deutschen Offenlegungsschrift 27 21 367 erwähnt. Darin wurde unter verschiedenen Ausführungsbeispielen die Möglichkeit angeführt, als Fertigungsunterlage der oberen Isolierschicht eine Trennleiste aus Moosgummi oder einem anderen ähnlichen Material in den Hohlraum einzuschieben und in ihm zu belassen. Damit wäre zwar der Luftzwischenraum im Verbundprofil beseitigt, aber das Anbringen einer solchen Trennleiste erfordert einen weiteren recht aufwendigen Arbeitsgang, der zudem sicherlich Schwierigkeiten bei der Fertigung bereitet. Letzteres dürfte auch der Grund sein, weshalb die Anwendung dieses Verfahrensschrittes in der Praxis bisher nicht bekannt geworden ist.

Ausgehend vom dargelegten Stand der Technik ist es die Aufgabe der Erfindung, ein Herstellungsverfahren anzugeben, mit dem sich thermisch isolierte Verbundprofile auch großer Querschnitte auf einfachstem und billigstem Wege anfertigen lassen, wobei diese Verbundprofile einen völlig geschlossenen Isolierbereich mit besonders günstigen Wärmedämmwerten aufweisen sollen. Für das Einbringen des mehrlagigen Isolierkernes wird im zweckmäßigsten Verfahrensablauf ein einziger Arbeitsgang angestrebt, um die Herstellungskosten weitgehend zu senken. Das soll ferner mit einem sehr sparsamen Verbrauch an Isoliermaterial bewirkt werden, der darauf beruht, daß man nicht für die gesamte Isolierzone teueren Werkstoff hoher Festigkeit benutzt, sondern dessen Einsatz auf tragende Teilabschnitte begrenzt und hinsichtlich des übrigen Füllmaterials auf die geringstmögliche Wärmeleitfähigkeit abzielt.

Zur Lösung der gestellten Aufgabe wird das in den Ansprüchen gekennzeichnete Verfahren vorgeschlagen. Damit gelingt es nun, Verbundprofile mit wenig Zeit- und Kostenaufwand herzustellen, die zwischen ihren metallisch nicht verbundenen Einzelprofilen über eine Isolierzone vorteilhaftester Eigenschaften verfügen. Diese bestehen darin, daß sich die Isolierzone sowohl aus Isoliermaterialschichten hoher Festigkeit zur form- und kraftschlüssigen Verbindung der Metallprofile als auch aus noch besser isolierenden, jedoch nicht tragenden Dämmschichten zusammensetzt, deren Aufbau und Stärke jedem Profilquerschnitt ohne die Notwendigkeit zusätzlicher Verfahrensschritte bzw. Arbeitsgänge angepaßt werden kann. Infolgedessen vereinfacht sich die Werkstoffauswahl mit dem Ergebnis, stets preiswerte Materialien einsetzen zu können, bei denen innerhalb der erfindungsgemäßen Verbundprofile sogar dasselbe Ausgangsmaterial Verwendung finden kann, dessen Struktur dann ausschließlich durch das Hinzufügen von Treibmitteln zweckentsprechend verändert wird.

Ausführungsbeispiele der Erfindung gelangen nachstehend an Hand der Zeichnungen zur Beschreibung. Darin zeigen im einzelnen:

Figuren 1-4 den schrittweisen Verfahrensablauf bei der Herstellung eines thermisch isolierten Verbundprofils in der Stirnansicht,

Fig. 5 den Querschnitt eines anderen in der Herstellung befindlichen Verbundprofils,

Fig. 6 das Herstellungsverfahren am Längsschnitt des Verbundprofils aus Fig. 4, und

Fig. 7 den Querschnitt eines nach dem erfindungsgemäßen Verfahren hergestellten Verbundprofils.

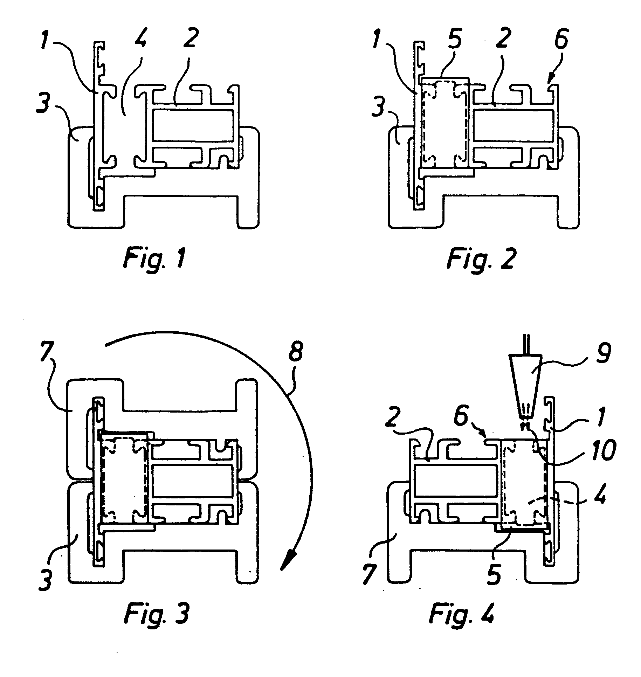

Wie aus Fig. 1 hervorgeht, werden zu Beginn des Verfahrens zwei in der Stirnansicht abgebildete Metallprofile 1 und 2 in eine gleichfalls von der Stirnseite her gesehene Halterung 3 mit Abstand zueinander eingelegt, so daß die Halterung 3 die Metallprofile 1/2 unter Bildung eines zwischen ihnen liegenden Freiraumes 4 abstützt. Anschließend wird der Freiraum 4 gemäß Fig. 2 von oben her sowie auch an den Enden der Metallprofile 1 und 2 mit einem selbstklebenden Abdeckstreifen 5 verschlossen.

Auf diese dann bereits lose zum Verbundprofil 6 zusammengefügten Metallprofile 1/2 wird ein in Fig. 3 wiedergegebenes, mit der Halterung 3 querschnittsgleiches rinnenförmiges Führungsprofil 7 aufgestülpt und gleichfalls nach Fig. 3 zusammen mit den Metallprofilen 1 und 2 sowie der Halterung 3 in Richtung des Pfeiles 8 um 180° gedreht. Hierdurch gelangt das Führungsprofil 7, wie in Fig. 4 dargestellt, nach unten, woraufhin die jetzt oben liegende Halterung 3 ihren Zweck erfüllt hat und deshalb von den Metallprofilen 1 und 2 abgenommen werden kann. In dem aus Fig. 4 ersichtlichen Zustand ist der Freiraum 4 nach unten hin abgedichtet und kann nun von seiner offenen Längsseite her mittels einer Einlaufdüse 9 mit zunächst in flüssiger Form befindlichem, anschließend erhärtendem Isoliermaterial 10 gefüllt werden.

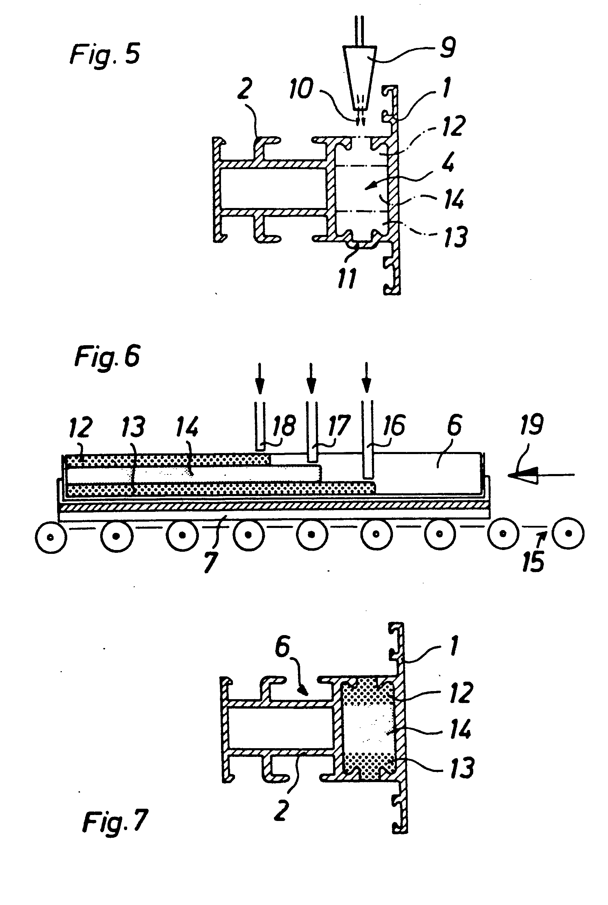

Nach dem in Fig. 5 abgebildeten Ausführungsbeispiel kann der zwischen den Metallprofilen 1 und 2 vorgesehene, unten geschlossene Freiraum 4 auch dadurch gebildet sein, daß die Metallprofile 1 und 2 vor dessen Ausgießen mit dem Isoliermaterial 10 als einstückiges Profil hergestellt werden, indem sie unterhalb des Freiraumes 4 durch einen Überbrückungssteg 11 in Verbindung stehen. Das Ausfüllen des Freiraumes 4 mit dem von der Düse 9 gelieferten Isoliermaterial 10 erfolgt sodann bei beiden Ausführungsbeispielen in der Weise, daß nacheinander abwechselnd den Freiraum 4 nur teilweise füllend eine form- und kraftschlüssige Verbindung der Metallprofile 1 und 2 herbeiführende feste Isoliermaterialschichten 12, 13 und eine oder mehrere in poröser Struktur erhärtende Dämmschichten 14 eingebracht werden. Dabei kann für die poröse Dämmschicht 14 dasselbe Material wie für die festen Isoliermaterialschichten 12 und 13 Verwendung finden, wenn ihm im Falle der porösen Dämmschichten 14 ein deren poröse Struktur, beispielsweise in der Form von geschlossenporigem Polyurethanschaum, ergebendes Treibmittel zugesetzt wird.

Eine weitere Vervollkommnung des erfindungsgemäßen Herstellungsverfahrens wird entsprechend Fig. 6 dadurch erreicht, daß man das als Ergebnis der in den Fig. 1 bis 4 wiedergegebenen Verfahrensschritte erhaltene Verbundprofil 6 mit dem Führungsprofil 7 auf einer Rollenbahn 15 ablegt und unter feststehenden Einlaufdüsen 16, 17 und 18 hinwegbewegt. Diese Einlaufdüsen 16, 17 und 18 sind in der Arbeitsrichtung 19 des Füllvorganges hintereinander angeordnet und werden somit beim Anbringen der beiden Isoliermaterialschichten 12/13 und der dazwischen liegenden Dämmschicht 14 zeitlich versetzt wirksam. Auf Grund dieser Anordnung gelingt es, alle Schichten 12, 13, 14 in einem einzigen Arbeitsgang herzustellen. In einer entsprechend abgewandelten Vorrichtung wäre es allerdings ebenso möglich, die untere Isoliermaterialschicht 13 beim Verschieben des Verbundprofils 6 in der Arbeitsrichtung 19, die darauf abzulagernde Dämmschicht 14 beim Zurückbewegen des Verbundprofils 6 und die obere Isoliermaterialschicht 12 ebenfalls in der Arbeitsrichtung 19 zu fertigen.

Welchen Aufbau das nach den zur Beschreibung gelangten Verfahrensgängen hergestellte Verbundprofil 6 aufweist, verdeutlicht Fig. 7. Daraus geht hervor, daß die Metallprofile 1 und 2 nunmehr lediglich durch die beiden festen Isoliermaterialschichten 12 und 13 miteinander verbunden sind, nachdem der selbstklebende Abdeckstreifen 5 der Fig. 4 bzw. der Überbrückungssteg 11 der Fig. 5 von den Metallprofilen 1/2 entfernt worden sind. Aufgabe der in poröser Struktur erhärteten Dämmschicht 14 ist es einmal, während des Einbringens der oberen Isoliermaterialschicht 12 für diese als Fertigungsunterlage zu dienen und ansonsten keinen Hohlraum zwischen den Isoliermaterialschichten 12 und 13 entstehen zu lassen, während sie auf den Zusammenhalt der Metallprofile 1 und 2 keinen Einfluß auszuüben hat. Zum Unterschied vom dargestellten Verbundprofil 6 können vor allem bei größeren Profilquerschnitten auch mehr als zwei Isoliermaterialschichten 12/13 und demzufolge auch mehrere dazwischen liegende Dämmschichten 14 eingebracht werden.

**Ansprüche**

1. Verfahren zur Herstellung thermisch isolierter Verbundprofile (6), bei dem mindestens zwei mit Abstand zueinander gehaltene Metallprofile (1, 2) einen nach unten hin abgedichteten Freiraum (4) bilden, der von seiner offenen Längsseite her mit zunächst in flüssiger Form befindlichem, anschließend erhärtendem Isoliermaterial vollständig ausgefüllt wird, dadurch gekennzeichnet, daß in den zwischen den Metallprofilen (1, 2) gebildeten Freiraum (4) nacheinander abwechselnd den Freiraum (4) jeweils in der Höhe nur teilweise füllend eine form- und kraftschlüssige Verbindung der Metallprofile (1, 2) herbeiführende feste Isoliermaterialschichten (12, 13) und eine oder mehrere in poröser Struktur erhärtende Dämmschichten (14) eingebracht werden.

2. Verfahren nach Anspruch 1, dadurch gekennzeichnet, daß das Einbringen der festen Isoliermaterialschichten (12, 13) sowie der Dämmschichten (14) mittels mehrerer zeitlich versetzt wirksam werdender Einlaufdüsen (16, 17, 18) erfolgt.

3. Verfahren nach Anspruch 2, dadurch gekennzeichnet, daß die zum Einbringen der festen Isoliermaterialschichten (12, 13) und der Dämmschichten (14) vorgesehenen Einlaufdüsen (16, 17, 18) in der Arbeitsrichtung (19) des Füllvorganges hintereinander angeordnet sind.

4. Verfahren nach Anspruch 1, dadurch gekennzeichnet, daß für die porösen Dämmschichten (14) dasselbe Material wie für die festen Isoliermaterialschichten (12, 13) Verwendung findet, indem es im Falle der porösen Dämmschichten (14) ein deren poröse Struktur ergebendes Treibmittel enthält.

**Claims**

1. Process for manufacturing thermally insulated composite profile-sections (6), in which process at least two metal profile-sections (1, 2) are held in a manner whereby there is a clearance between them which forms an unoccupied space (4), this space being sealed off in the downward direction and completely filled, from its open longitudinal side, with insulating material which is initially present in liquid form and subsequently sets hard, characterised in that solid layers (12, 13) of insulating material and one or more insulating layers (14), the latter setting to form a porous texture, are successively introduced into the unoccupied space (4) formed between the metal profile-sections (1, 2), in an alternating arrangement, in each case only partly filling the unoccupied space (4) in the vertical direction, the solid layers (12, 13) of insulating material effecting the connection of the metal profile-sections (12, 13) in a manner which is both positive and adhesive in nature.

2. Process according to Claim 1, characterised in that the solid layers (12, 13) of insulating material, as well as the insulating layers (14), are introduced by means of a plurality of inlet nozzles (16, 17, 18) which become active in chronological succession.

3. Process according to Claim 2, characterised in that the inlet nozzles (16, 17, 18), provided for introducing both the solid layers (12, 13) of insulating material and the insulating layers (14), are arranged one behind another in the direction (19) in which the filling operation is carried out.

4. Process according to Claim 1, characterised in that the same material is used for both the porous insulating layers (14) and the solid layers (12, 13) of insulating material, whereby, in the case of the porous insulating layers (14) the material contains a foaming agent which produces their porous texture.

**Revendications**

1. Procédé de fabrication d'éléments profilés composites d'isolation thermique (6) selon lequel au moins deux éléments profilés en métal (1 et 2), maintenus à distance l'un de l'autre, forment entre eux un espace libre (4) fermé de façon étanche vers le bas qui, par son côté longitudinal ouvert, est rempli complètement d'une matière isolante qui se trouve tout d'abord à l'état liquide et qui fait ensuite prise, le procédé étant caractérisé en ce que dans l'espace libre (4) qui est formé entre les éléments profilés en métal (1 et 2), il est déposé, en alternance, l'une après l'autre, des couches de matière isolante compacte (12 et 13) qui, ne remplissant chacune que partiellement l'espace libre (4) sur sa hauteur, provoquent une liaison et une fixation des éléments profilés en métal (1 et 2) l'un à l'autre, par adaptation de formes et sous l'effet d'une force, ainsi qu'une ou plusieurs couches d'arrêt ou d'isolation (14) qui font prise de façon à présenter une structure poreuse.

2. Procédé suivant la revendication 1, caractérisé en ce que le dépôt des couches de matière isolante compacte (12 et 13), ainsi que celui des couches d'arrêt ou d'isolation (14) sont effectués à l'aide de plusieurs buses ou tubulures d'introduction (16, 17 et 18) qui entrent en action avec décalage dans le temps.

3. Procédé suivant la revendication 2, caractérisé en ce que les buses ou tubulures d'introduction (16, 17 et 18) qui sont prévues pour le dépôt des couches de matière isolante compacte (12 et 13) et pour le dépôt des couches d'arrêt ou d'isolation (14) sont prévues l'une derrière l'autre dans le sens de travail (19) de l'opération de remplissage.

4. Procédé suivant la revendication 1, caractérisé en ce que pour former les couches d'arrêt ou d'isolation poreuses (14), on utilise la même matière que celle qui est utilisée pour former les couches de matière isolante compacte (12 et 13), cette matière, pour la formation des couches d'arrêt ou d'isolation poreuses (14) contenant un agent porogène ou agent de gonflement destiné à donner à ces couches leur structure poreuse.

Fig. 1

Fig. 2

Fig. 3

Fig. 4

*Fig. 5*

*Fig. 6*

*Fig. 7*